# EUROPEAN PATENT SPECIFICATION

(11) **EP 2 276 129 B1**
(45) Date of publication and mention of the grant of the patent: **07.09.2011**
(21) Application number: 08750420.5
(22) Date of filing: 31.03.2008
(51) Int. Cl.: H02G 3/04, H02G 3/06

(54) **ENGAGEABLE STRETCH FOR CABLE TRAYS**
EINGREIFBARES STRECKGLIED FÜR KABELLADEN
SECTION POUVANT ETRE COUPLEE POUR CHEMINS DE CABLES

(43) Date of publication of application: 19.01.2011
(73) Proprietor: Interflex, S.A., 08110 Montcada I Reixac (ES)
(72) Inventor: LOZANO CALVO, Javier, E-08110 Montcada I Reixac (ES)
(74) Representative: Ponti Sales, Adelaida
(86) International application number: PCT/ES2008/000186
(87) International publication number: WO 2009/121976

(56) References cited:
- EP-A- 1 511 142
- FR-A- 2 812 774
- US-A1- 2004 003 935

## Description

The present invention refers to a engageable stretch for cable trays, of grid kind, i.e. each stretch is formed by a plurality of longitudinal and transverse rods joined to each other.

### BACKGROUND OF THE INVENTION

It is usual to use cable trays to guide electrical cables and the like in installations. This tray has a U-shape cross section, with a bottom and two side walls. These trays are formed by a plurality of stretches engaged to each other at their ends.

One kind of these cable trays is that called tray of grid kind, which is formed by a plurality of metallic longitudinal and transverse rods joined to each other forming a grid and with a U-shape longitudinal fold.

In Spanish patent P200301943, of the applicant than the present application, an engagement assembly for cable trays of grid kind is disclosed, comprising plates which are used to engage the different stretches which form the tray. With this engagement assembly it is obtained an excellent engagement between the stretches, but it is necessary to use additional pieces, i.e. said plates.

It is also known a cable tray from document DE 199 46 388 A1, which is of grid kind and in which the engagement between the different stretches of the tray is done by a transverse rod placed at the end of a stretch which is housed between two complementary transverse rods provided at the end of the adjacent stretch. This tray has de advantage that it is not necessary any additional piece, but the engagement has no kind of lock against an accidental disengagement.

US 2004/0003935 discloses a cableway comprising at least two segments provided with means suitable and designed for enabling relative movement of the two segments between a compact, first position for transport or storage and a deployed, second position for use, in which the end portions of the segments are substantially in longitudinal alignement, means being provided to look the segment in said second position.

### DESCRIPTION OF THE INVENTION

With the stretch of the invention said drawbacks can be solved, presenting other advantages that will be described.

The engageable stretch of cable trays of the present invention comprises a plurality of stretches engaged to each other by engaging means provided at one of the ends of each stretch, each stretch being formed by a plurality of longitudinal and transverse rods joined to each other, presenting a U-shaped cross-section, defining a bottom and a pair of side walls, and it is characterised in that said engaging means comprises a plurality of hooks formed at one of the ends of at least some of said longitudinal rods, which engage on at least one transverse rod of the adjacent stretch.

Thanks to this feature, the engagement between stretches forming the tray can be done in a comfortable and reliable way, without any accessory or tool.

Advantageously, said longitudinal rods comprise a deviation, so that said hooks are not aligned with the longitudinal rods of the adjacent stretch.

In an alternative embodiment, said hooks are laterally moved, so that its front end is moved with respect to the longitudinal axis of the longitudinal rod.

To prevent the accidental disengagement of the stretches forming the tray, in its engagement position, the front end of the hooks placed at the side walls of the hooks are place below the longitudinal rod complementary to the adjacent stretch.

If wished, the free end of each hook can be tightly housed inside a space defined between two transversal rods.

Advantageously, said deviations or said hooks can be symmetrically deviated with respect to the longitudinal axis of the stretch.

### BRIEF DESCRIPTION OF THE DRAWINGS

For a better understanding to what has been disclosed some drawings are attached in which, diagrammatically and only as a non-limitative example, a practical case of embodiment is shown.
Fig. 1 is a perspective view of two stretches of the cable tray of the present invention engaged to each other, according to a first embodiment;
Fig. 2 is a perspective detail of the engaging zone of the two stretches of the tray of the present invention, according to a first embodiment;
Fig. 3 is a perspective view of two stretches of the cable tray of the present invention engaged to each other, according to a second embodiment;
Fig. 4 is a perspective detail of the engaging zone of the two stretches of the tray of the present invention, according to a second embodiment;
Fig. 5 is a perspective view of two stretches of the cable tray of the present invention engaged to each other, according to a third embodiment; and
Fig. 6 us a perspective detail of the engagement zone of the two stretches of the tray of the present invention, according to a third embodiment.

### DESCRIPTION OF PREFERRED EMBODIMENTS

A stretch of the present invention is identified generally by numeral reference 1. A plurality of stretches 1 engaged to each other form a cable tray.

Each stretch 1 comprises a plurality of longitudinal rods 2 and transversal rods 3 joined to each other. As it can be seen in the figures, said transverse rods 3 have a U-shape, defining the bottom and the side walls of the tray.

According to the invention, each longitudinal rod 2 comprises at one of its ends a hook 4, which is formed from said rod itself, i.e. the end of the rod is shaped as a hook.

Said hooks are engaged on a transverse rod 3 of the adjacent stretch 1.

To prevent the alignment of said hooks 4 with the corresponding longitudinal rods of the adjacent stretch, which would prevent its engagement, each longitudinal rod 2 comprises a deviation 5 placed close to said hook 4. It must be pointed out that said deviation can be placed in any suitable place along the rod, even though it will be placed preferably close to said hook 4.

The hooks 4 placed at the walls of the stretch are placed under the longitudinal rod 2 complementary with the adjacent stretch, preventing thereby the accidental disengagement.

Furthermore, said deviations 5 are symmetrically deviated from the longitudinal axis of each stretch 1.

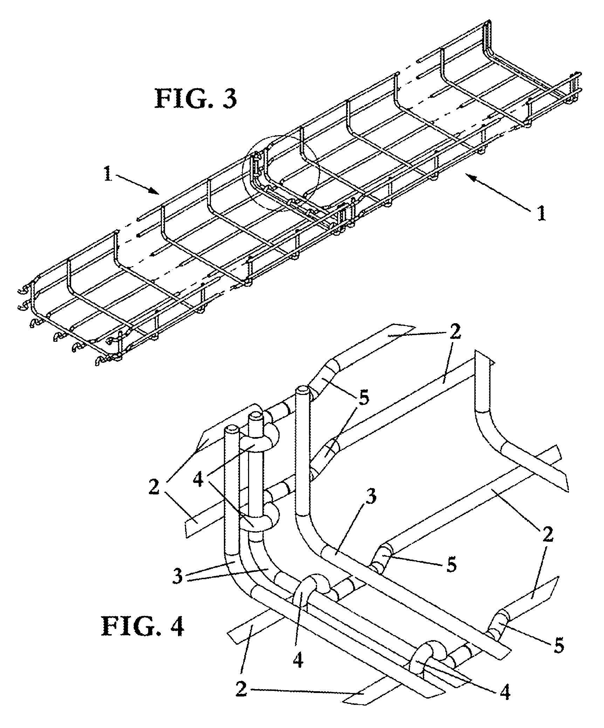

In Figs. 3 and 4 a second embodiment of the cable tray of the present invention is shown. In this second embodiment the same numeral references identifying the same elements than in the previous embodiment are used.

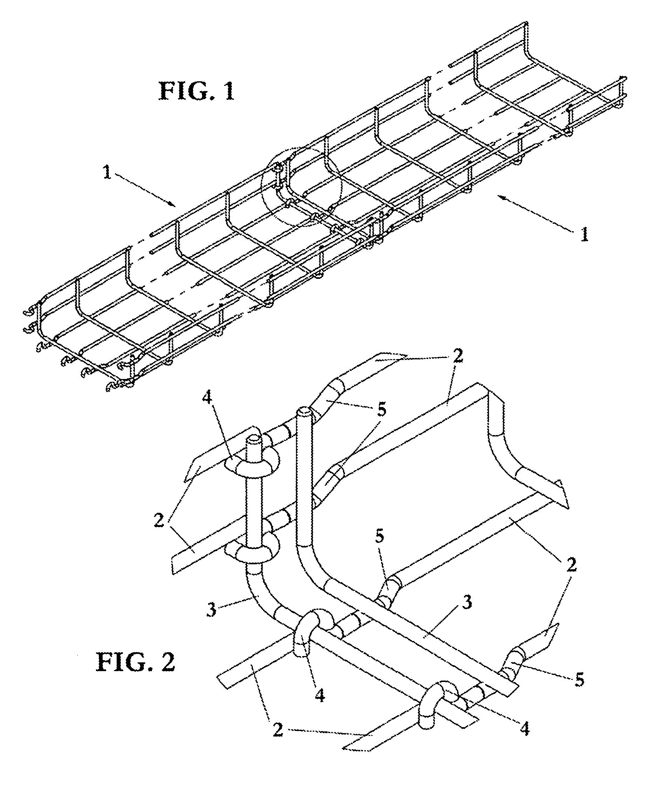

The only difference with respect to the first embodiment shown in Figs. 1 and 2 is that the free end of each hook 4 is tightly housed inside a space defined between two transversal rods 3.

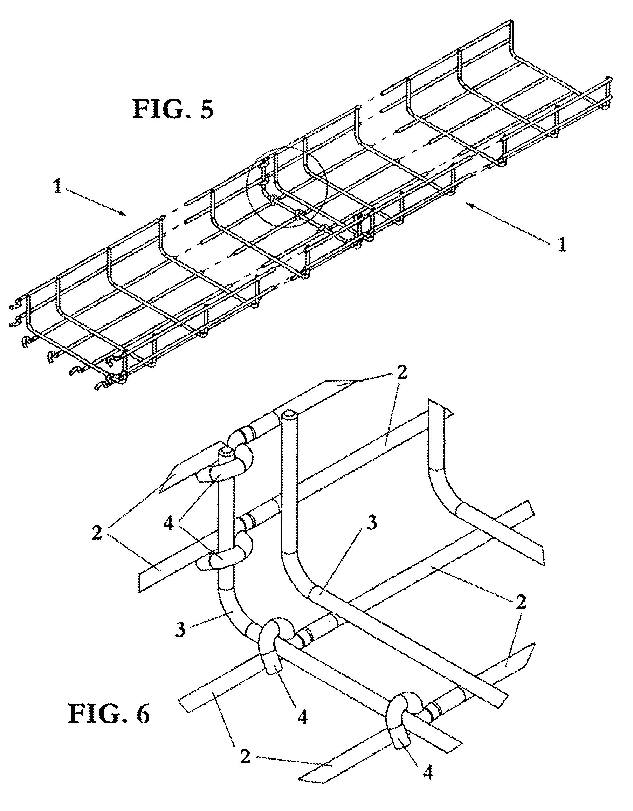

In Figs. 5 and 6 is shown a third embodiment of the cable tray of the present invention is shown. In this second embodiment the same numeral references identifying the same elements than in the previous embodiment are used.

The only difference with respect to the previous embodiments is that the longitudinal rods 2 do not comprise any deviation, but are the hooks 4 themselves with are deviated, i.e. the front end of the hook 4 is not aligned with the longitudinal axis of the longitudinal rod 2.

In this case, only the front end of the hooks 4 of the side walls of the stretch 1 is placed below the longitudinal rods 2 complementary with the adjacent stretch 1.

Also in this case, the hooks 4 are deviated symmetrically with respect to the longitudinal axis of the stretch 1.

In must be pointed out that these hooks 4 according to this third embodiment can also be tightly housed in a space defined by two transverse rods 3, as in the case of the previous embodiment.

Even though reference is made to specific embodiments of the invention, it is apparent for a person skilled in the art that the disclosed cable tray is susceptible of numerous variations and modifications, and that all the details can be substituted by others technically equivalent, without departing from the scope of protection defined by the attached claims.

## Claims

1. Engageable stretch of cable trays, the tray comprising a plurality of stretches (1) engaged to each other by engaging means provided at one of the ends of each stretch (1), each stretch (1) being formed by a plurality of longitudinal (2) and transverse (3) rods joined to each other, presenting a U-shaped cross-section, defining a bottom and a pair of side walls, said engaging means comprising a plurality of hooks (4) formed at one of the ends of at least some of said longitudinal rods (2), which engage on at least one transverse rod (3) of the adjacent stretch,
**characterised in that** said longitudinal rods (2) comprise a deviation (5), so that said hooks (4) are not aligned with the longitudinal rods (2) of the adjacent stretch.

2. Engageable stretch according to claim 1, **characterised in that** said hooks (4) are laterally deviate, so that their front end is moved with respect to the longitudinal of the longitudinal rod (2).

3. Engageable stretch according to anyone of the previous claims, **characterised in that**, at its engagement position, the front end of the hooks (4) placed at the side walls of the stretch are placed below the longitudinal rod (2) complementary with the adjacent stretch.

4. Engageable stretch according to anyone of the previous claims, **characterised in that** the free end of each hook (4) is tightly housed inside a space defined between two transversal rods (3).

5. Engageable stretch according to claim 1, **characterised in that** said deviations (5) are symmetrically deviated with respect to the longitudinal axis of the stretch.

6. Engageable stretch according to claim 2, **characterised in that** said hooks (4) are symmetrically deviated with respect to the longitudinal axis of the stretch.

## Patentansprüche

1. Eingreifbares Streckglied für Kabelkanäle, wobei der Kanal eine Mehrzahl von Streckgliedern (1) aufweist, die untereinander mittels Eingriffsmitteln in Eingriff stehen, die an einem der Enden eines jeden Streckglieds (1) vorgesehen sind, wobei je Streckglied (1) aus einer Mehrzahl von längs (2) und quer verlaufenden (3) Stangen gebildet ist, die untereinander verbunden sind, wobei sie einen U-förmigen Querschnitt aufweisen, der einen Boden und ein Paar von Seitenwänden definiert, wobei die Eingriffsmittel eine Mehrzahl von Haken (4) aufweisen, die an einem der Enden an wenigstens einer der Längsstangen (2) ausgebildet sind, die in wenigstens eine der Querstangen (3) des benachbarten Streckglieds eingreifen, **dadurch gekennzeichnet, dass** die Längsstangen (2) eine Abweichung (5) aufweisen, so dass die Haken (4) nicht mit den Längsstangen (2) des benachbarten Streckglieds fluchten.

2. Eingreifbares Streckglied nach Anspruch 1, **dadurch gekennzeichnet, dass** die Haken (4) seitlich abweichen, so dass deren vorderes Ende bezüglich der Längsachse der Längsstange (2) verschoben ist.

3. Eingreifbares Streckglied nach einem der vorhergehenden Ansprüche, **dadurch gekennzeichnet, dass** an ihrer Eingriffsposition die vorderen Enden der Haken (4), die an den Seitenwänden des Streckglieds sitzen, unterhalb der Längsstange (2) gesetzt sind, die komplementär zu dem benachbarten Streckglied ist.

4. Eingreifbares Streckglied nach einem der vorhergehenden Ansprüche, **dadurch gekennzeichnet, dass** das freie Ende eines jeden Hakens (4) eng innerhalb eines Raumes aufgenommen ist, der zwischen zwei Querstangen (3) definiert ist.

5. Eingreifbares Streckglied nach Anspruch 1, **dadurch gekennzeichnet dass** die Abweichungen (5) symmetrisch bezüglich der Längsachse des Streckglieds abweichen.

6. Eingreifbares Streckglied nach Anspruch 2, **dadurch gekennzeichnet, dass** die Haken (4) symmetrisch bezüglich der Längsachse des Streckglieds abweichen.

## Revendications

1. Section pouvant être couplée de chemins de câble, le chemin comprenant une pluralité de sections (1) couplées les unes aux autres par des moyens de couplage fournis au niveau d'une des extrémités de chaque section (1), chaque section (1) étant formée d'une pluralité de tiges longitudinales (2) et transversales (3) reliées les unes aux autres, présentant une section transversale en forme de U, définissant un fond et une paire de parois latérales, ledit moyen de couplage comprenant une pluralité de crochets (4) formés au niveau d'une des extrémités d'au moins certaines desdites tiges longitudinales (2), qui se couplent à au moins une tige transversale (3) de la section adjacente, **caractérisée en ce que** lesdites tiges longitudinales (2) comprennent une déviation (5), de sorte que lesdits crochets (4) ne sont pas alignés avec les tiges longitudinales (2) de la section adjacente.

2. Section pouvant être couplée selon la revendication 1, **caractérisée en ce que** lesdits crochets (4) sont déviés latéralement, de sorte que leur extrémité avant est décalée par rapport à l'axe longitudinal de la tige longitudinale (2).

3. Section pouvant être couplée selon l'une quelconque des revendications précédentes, **caractérisée en ce que**, au niveau de sa position de couplage, les extrémités avant des crochets (4) placées au niveau des parois latérales de la section sont placées en dessous des tiges longitudinales (2) complémentaires de la section adjacente.

4. Section pouvant être couplée selon l'une quelconque des revendications précédentes, **caractérisée en ce que** l'extrémité libre de chaque crochet (4) se loge bien à l'intérieur d'un espace défini entre deux tiges transversales (3).

5. Section pouvant être couplée selon la revendication 1, **caractérisé en ce que** lesdites déviations (5) sont déviées de manière symétrique par rapport à l'axe longitudinal de la section.

6. Section pouvant être couplée selon la revendication 2, **caractérisé en ce que** lesdits crochets (4) sont déviés de manière symétrique par rapport à l'axe longitudinal de la section.
